# FASCICULE DE BREVET EUROPEEN

(11) **EP 0 935 547 B1**
(45) Date de publication et mention de la délivrance du brevet: **12.11.2003**
(21) Numéro de dépôt: 97938952.5
(22) Date de dépôt: 27.08.1997
(51) Int. Cl.: B60T 13/565, B60T 8/36

(54) **DISPOSITIF COMPACT DE COMMANDE DE FREINAGE**
KOMPAKTE BREMSSTEUERVORRICHTUNG
COMPACT BRAKE CONTROL DEVICE

(30) Priorité: 08.11.1996 FR 9613615
(43) Date de publication de la demande: 18.08.1999
(73) Titulaire: Bosch Systemes de Freinage, 93700 Drancy (FR)
(72) Inventeur: VERBO, Ulysse, F-93600 Aulnay-sous-Bois (FR); LEBOISNE, Cédric, F-93120 La Courneuve (FR)
(74) Mandataire: Bentz, Jean-Paul
(86) Numéro de dépôt international: FR9701528
(87) Numéro de publication internationale: WO98021078

(56) Documents cités:
- EP-A- 0 356 817
- DE-A- 2 255 130
- DE-A- 4 316 582
- DE-U- 9 215 237

## Description

La présente invention concerne un dispositif de commande de freinage, comprenant un servomoteur à dépression, un maître-cylindre, et un module électro-hydraulique de contrôle de pression de freinage, dans lequel le servomoteur présente des coquilles avant et arrière de forme cylindro-tronconique et de rayons externes respectifs déterminés et dans lequel le maître-cylindre et le module sont rendus solidaires de la coquille avant.

Dans un dispositif de ce type, au moins connu de l'homme de l'art par un usage public, le module électro-hydraulique est monté sur une platine elle-même portée par la liaison mécanique qui relie le maître-cylindre à la coquille avant du servomoteur.

Compte tenu cependant du poids du module, une telle solution oblige à modifier l'épaisseur de la coquille avant, la disposition et le dimensionnement de la liaison mécanique entre le servomoteur et le maître-cylindre, et donc aussi le servomoteur et le maître-cylindre au niveau de cette liaison mécanique.

Le document EP-A-0 356817 présente également un dispositif de commande de freinage comprenant un servomoteur à dépression, un maître-cylindre, et un module électro-hydraulique de contrôle de pression de freinage, dans lequel le servomoteur présente des coquilles avant et arrière de forme cylindro-tronconique et de rayons externes respectifs déterminés, et dans lequel le maître-cylindre et le module sont rendus solidaires de la coquille avant.

L'invention s'inscrit dans ce contexte et a pour but de proposer un dispositif de commande de freinage qui, bien que comprenant les mêmes composants et présentant la même compacité, peut être réalisé à partir de composants standard, sans augmentation de matière ni modification majeure des composants.

A cette fin, le dispositif de commande de freinage selon l'invention est essentiellement caractérisé en ce que le module est rendu solidaire de la coquille avant en au moins trois points de fixation qui appartiennent à une couronne périphérique de la coquille avant, délimitée par un rayon interne au moins égal à la moitié du rayon externe de la coquille avant.

En pratique, il est préférable de rendre le module solidaire de la coquille avant par l'intermédiaire d'au moins deux brides.

Le maintien du module est encore amélioré en donnant à la couronne périphérique un rayon interne sensiblement égal au rayon externe de la coquille avant.

Dans ce cas, les points de fixation appartiennent de préférence à un cerclage enserrant la coquille avant, ce cerclage pouvant être serti avec la coquille avant sur la coquille arrière.

D'autres caractéristiques et avantages de l'invention ressortiront clairement de la description qui en est faite ci-après, à titre indicatif et nullement limitatif, en référence aux dessins, dans lesquels :
- la Figure 1 est une vue de côté d'un dispositif de commande de freinage connu par un usage public antérieur;
- la Figure 2 est une vue de face du dispositif de la Figure 1;
- la Figure 3 est une vue de côté d'un dispositif de commande de freinage conforme à un premier mode de réalisation de l'invention;
- la Figure 4 est une vue de face du dispositif de la Figure 3;
- la Figure 5 est une vue de côté d'un dispositif de commande de freinage conforme à un second mode de réalisation de l'invention;
- la Figure 6 est une vue de face du dispositif de la Figure 5;
- la Figure 7 est une vue de côté d'un dispositif de commande de freinage conforme à un troisième mode de réalisation de l'invention;
- la Figure 8 est une vue de face du dispositif de la Figure 7;
- la Figure 9 est une vue en coupe agrandie de la zone 9 du dispositif de la Figure 7;
- la Figure 10 est une vue de côté d'un dispositif de commande de freinage conforme à un quatrième mode de réalisation de l'invention; et
- la Figure 11 est une vue de face du dispositif de la Figure 10.

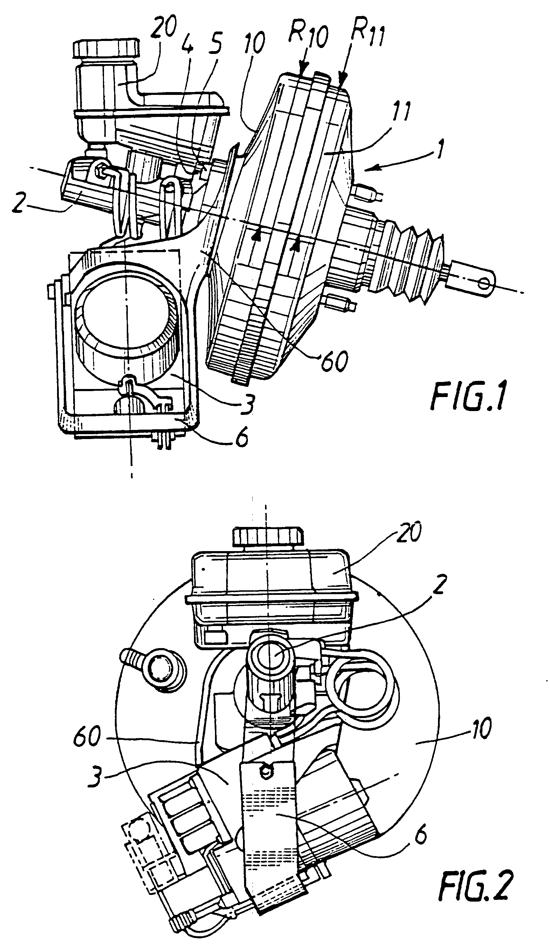

L'invention s'applique à un dispositif de commande de freinage de type connu en soi (Figures 1 et 2), comprenant un servomoteur à dépression 1, un maître-cylindre 2 doté d'un réservoir 20, et un module électro-hydraulique 3 permettant le contrôle de la pression de freinage normalement issue du maître-cylindre 2, par exemple pour éviter le blocage et/ou le patinage des roues.

Le servomoteur comporte traditionnellement une coquille avant 10 et une coquille arrière 11, ces coquilles ayant toutes deux une forme cylindro-tronconique et présentant des rayons externes respectifs très voisins R10 et R11, le maître-cylindre 2 étant rendu solidaire de la coquille avant 10 par l'intermédiaire de vis 4 et d'écrous 5.

Dans le dispositif connu, le module 3 est porté par une platine 6 dont un prolongement 60 est enserré entre le servomoteur 1 et le maître-cylindre 2 au moyen des vis et des écrous tels que 4 et 5 qui servent à assujettir le maître-cylindre au servomoteur.

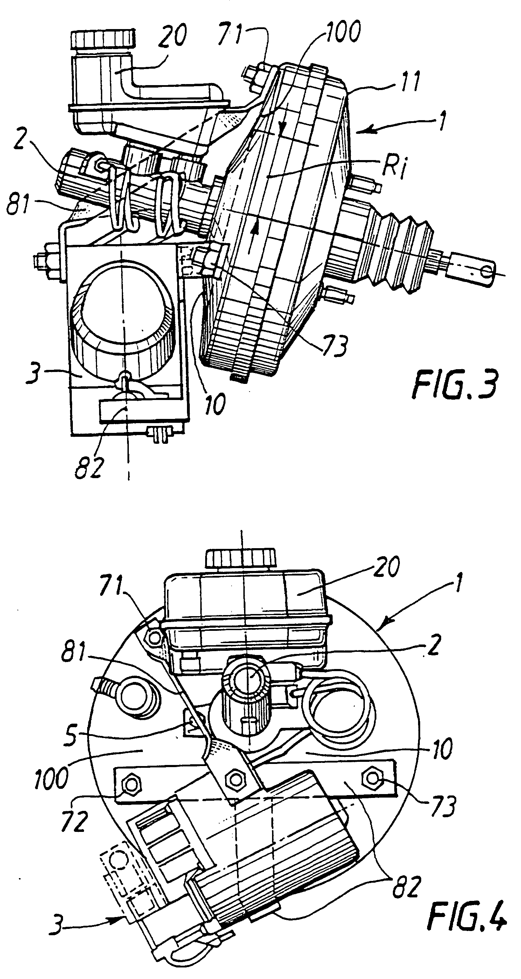

Selon l'invention, au contraire (Figures 3 à 11), le module 3 est rendu solidaire de la coquille avant 10 en au moins trois points de fixation tels que 71, 72, 73 qui appartiennent à une couronne périphérique 100 de la coquille avant 10, délimitée par un rayon interne Ri au moins égal à la moitié du rayon externe R10 de la coquille avant.

Plutôt que d'utiliser un support massif, il est alors possible et préférable de rendre le module 3 solidaire de la coquille avant 10 par l'intermédiaire de plusieurs brides telles que 81, 82 et 83.

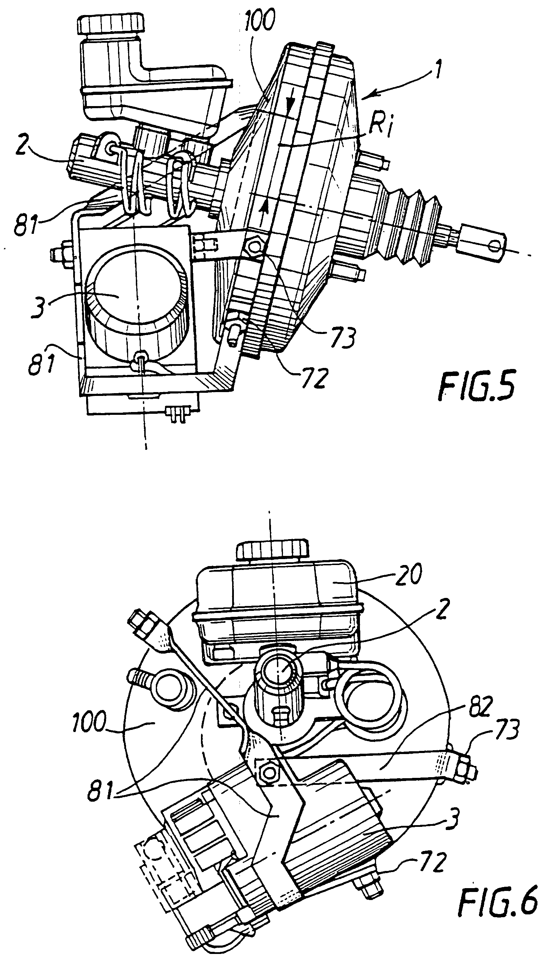

Comme le montrent les Figures 5 à 11, le maintien du module 3 est rendu optimal en donnant à la couronne périphérique 100 un rayon interne Ri sensiblement égal au rayon externe R10 de la coquille avant 10, les points de fixation tels que 71, 72, et 73 se trouvant alors à la périphérie extrême de la coquille avant 10.

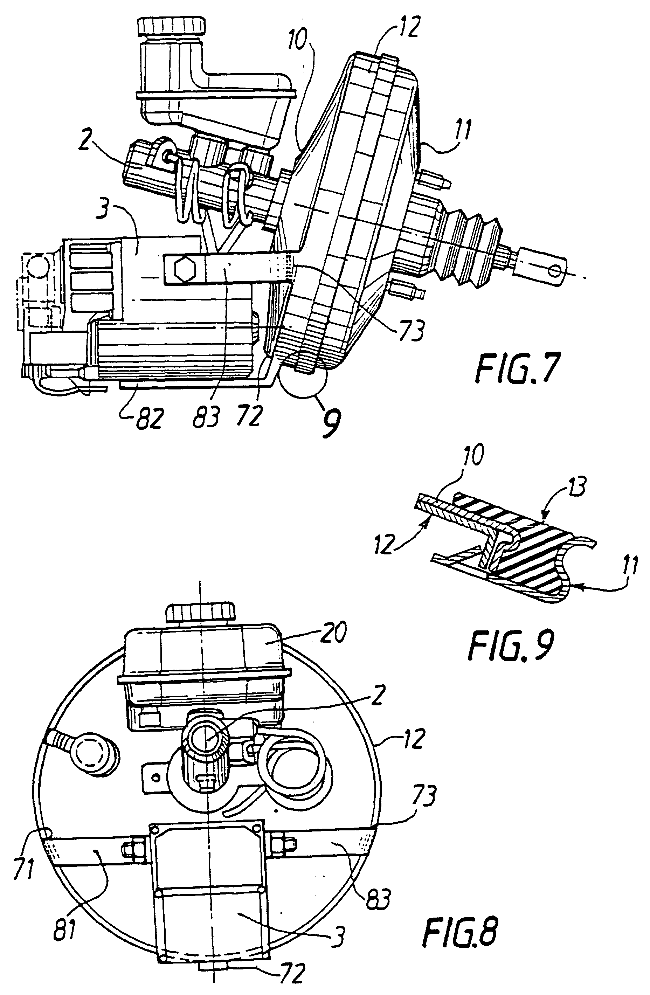

Dans les modes de réalisation préférés de l'invention, illustrés aux Figures 7 à 11, les points de fixation tels que 71, 72, et 73 appartiennent à un cerclage 12 enserrant la coquille avant 10.

Dans ce cas, il est possible, comme le montre la Figure 9, de sertir le cerclage avec la coquille avant 10 sur la coquille arrière 11, le sertissage des deux coquilles l'une avec l'autre enserrant aussi, de façon bien connue, la membrane élastique 13 du servomoteur.

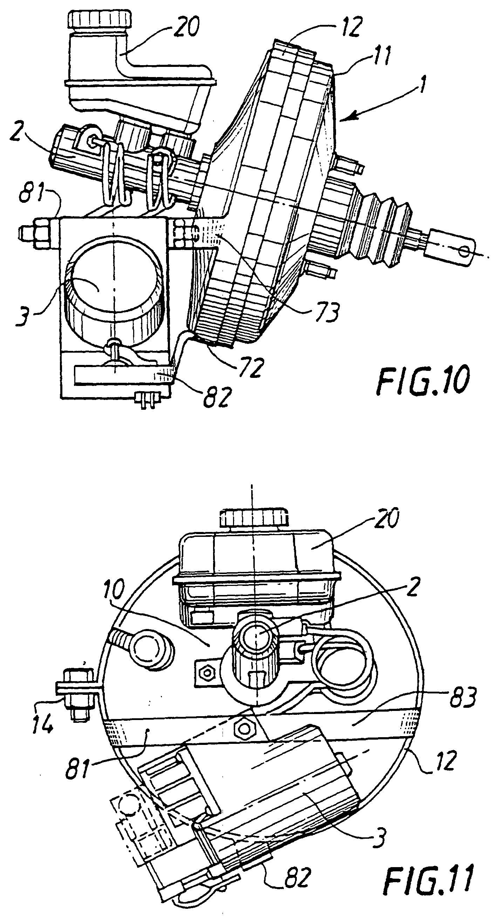

Il est cependant également possible, comme le montrent les Figures 10 et 11, de prévoir un cerclage ouvert dont le périmètre peut être réduit au moyen d'un boulon 14 jusqu'à permettre à ce cerclage de se maintenir sur la coquille avant par compression élastique de cette dernière.

## Revendications

1. Dispositif de commande de freinage, comprenant un servomoteur à dépression (1), un maître-cylindre (2), et un module électro-hydraulique (3) de contrôle de pression de freinage, dans lequel le servomoteur (1) présente des coquilles avant (10) et arrière (11) de forme cylindro-tronconique et de rayons externes respectifs déterminés (R10, R11) et dans lequel le maître-cylindre (2) et le module (3) sont rendus solidaires de la coquille avant, **caractérisé en ce que** le module (3) est rendu solidaire de la coquille avant (10) en au moins trois points de fixation (71, 72, 73) qui appartiennent à une couronne périphérique (100) de la coquille avant, délimitée par un rayon interne (Ri) au moins égal à la moitié du rayon externe (R10) de la coquille avant.

2. Dispositif de commande de freinage suivant la revendication 1, **caractérisé en ce que** le module (3) est rendu solidaire de la coquille avant (10) par l'intermédiaire d'au moins deux brides (81, 82).

3. Dispositif de commande de freinage suivant la revendication 1 ou 2, **caractérisé en ce que** ladite couronne périphérique (100) présente un rayon interne (Ri) sensiblement égal au rayon externe (R10) de la coquille avant.

4. Dispositif de commande de freinage suivant l'une quelconque des revendications précédentes, **caractérisé en ce que** lesdits points de fixation (71, 72, 73) appartiennent à un cerclage (12) enserrant la coquille avant.

5. Dispositif de commande de freinage suivant l'une quelconque des revendications précédentes, **caractérisé en ce que** ledit cerclage (12) est serti avec la coquille avant (10) sur la coquille arrière (11).

## Claims

1. Brake-control device comprising a vacuum booster (1), a master cylinder (2) and an electro-hydraulic module (3) for controlling the braking pressure, in which device the booster (1) has a front shell (10) and a rear shell (11) of cylindro-frustoconical shape and of given respective outside radii (R10, R11) and in which the master cylinder (2) and the module (3) are secured to the front shell, **characterized in that** the module (3) is secured to the front shell (10) at least at three fixing points (71, 72, 73) which belong to a peripheral ring (100) of the front shell, delimited by an inside radius (Ri) at least equal to half the outside radius (R10) of the front shell.

2. Brake-control device according to Claim 1, **characterized in that** the module (3) is secured to the front shell (10) by means of at least two straps (81, 82).

3. Brake-control device according to Claim 1 or 2, **characterized in that** the said peripheral ring (100) has an inside radius (Ri) substantially equal to the outside radius (R10) of the front shell.

4. Brake-control device according to any one of the preceding claims, **characterized in that** the said fixing points (71, 72, 73) belong to hooping (12) encircling the front shell.

5. Brake-control device according to any one of the preceding claims, **characterized in that** the said hooping (12) is crimped, with the front shell (10), to the rear shell (11).

## Patentansprüche

1. Bremssteuervorrichtung, enthaltend einen Unterdruckservomotor (1), einen Hauptzylinder (2) und ein elektrohydraulisches Modul (3) zur Bremsdrucksteuerung, wobei der Servomotor (1) eine vordere (10) und eine hintere Schale (11) mit Zylinderkegelstumpfform und mit jeweils bestimmtem Außenradius (R10, R11) enthält und wobei der Hauptzylinder (2) und das Modul (3) fest mit der vorderen Schale verbunden sind, **dadurch gekennzeichnet, dass** das Modul (3) in mindestens drei Befestigungspunkten (71, 72, 73) fest mit der vorderen Schale (10) verbunden ist, welche zu einem Umfangsring (100) der vorderen Schale gehören, der von einem Innenradius (Ri) eingegrenzt wird, der mindestens gleich dem halben Außenradius (R10) der vorderen Schale ist.

2. Bremssteuervorrichtung nach Anspruch 1, **dadurch gekennzeichnet, dass** das Modul (3) über zumindest zwei Flansche (81, 82) fest mit der vorderen Schale (10) verbunden ist.

3. Bremssteuervorrichtung nach Anspruch 1 oder 2, **dadurch gekennzeichnet, dass** der genannte Umfangsring (100) einen Innenradius (Ri) aufweist, der im wesentlichen gleich dem Außenradius (R10) der vorderen Schale ist.

4. Bremssteuervorrichtung nach einem der vorangehenden Ansprüche, **dadurch gekennzeichnet, dass** die genannten Befestigungspunkte (71, 72, 73) zu einer Umreifung (12) gehören, welche die vordere Schale einspannt.

5. Bremssteuervorrichtung nach einem der vorangehenden Ansprüche, **dadurch gekennzeichnet, dass** die genannte Umreifung (12) mit der vorderen Schale (10) an der hinteren Schale (11) verstemmt ist.
